Europäisches Patentamt

European Patent Office

Office européen des brevets

(19)

(11) Publication number: **0 237 494**
**A1**

(12) # EUROPEAN PATENT APPLICATION

(21) Application number: **87830067.2**

(22) Date of filing: **25.02.87**

(51) Int. Cl.³: **B 60 P 3/32**
**B 60 P 3/42, B 62 D 29/04**

(30) Priority: **07.03.86 IT 5932986 U**

(43) Date of publication of application:
**16.09.87 Bulletin 87/38**

(84) Designated Contracting States:
**AT BE CH DE FR GB LI LU NL SE**

(71) Applicant: **TECNOCASA S.R.L.**
**Via Dotti 59**
**I-31100 Treviso(IT)**

(72) Inventor: **Fumiento, Liliana**
**Via Largo F.lli Rosselli 9**
**I-31022 Preganziol (Treviso)(IT)**

(54) **Modular superstructure for special use vehicles and campers.**

(57) The superstructures are used to transform chassises with calender and/or with cabin into special use van type vehicles suitable for the transportation of materials and persons, and in particular into campers.

As there exists the possibility of dividing the superstructure into two or four parts and adding special inserts table 1 detail 2 and table 2 detail 2, any size of van type vehicle can be produced and the superstructure can be adapted to any type of chassis, and by using the parallel metal strips provided on the base table 3 detail 3, the superstructure can be mounted by means of simple bolting table 3 detail 5 to any means of attachment on any chassis.

The superstructure can be mounted complete table 3 onto any type of chassis with calender or chassis with cabin table 4 by removing the driver and passenger doors and the calender, then by riveting and covering with a layer of fibreglass where the cabin is fixed to the superstructure table 4 detail 6, the vehicle forms a harmonious whole with the special recesses table 4 detail 7 which create a perfect homogenity of structure and style.

The structure's self-supporting properties, stemming from the double fibreglass shell sandwiched with insulating material, consequently the possibility of placing doors and windows in any position, permits a vast range of applications: ambulances, vans, shops and in particular campers; thereby allowing any type of interior arrangement and furnishing which are independent of the cambers.

Other features are complete thermal and acoustic insulation as well as absolute watertightness and salubrity stemming from the inalterability of fibreglass.

EP 0 237 494 A1

./...

TAV. 1

# MODULAR SUPERSTRUCTURE FOR SPECIAL USE VEHICLES AND CAMPER

The superstructures are used to transform chassises into special use van-type vehicles and in particular campers.

They are suitable for mounting on all chassises, those with cabins and/or only with calander as they come direct from the manufacturers, allowing for the above-mentioned chassises to be transformed into van-type vehicles to be used both for the transportation of materials and/or materials and persons and, thanks to the new and special features described here, as campers and special vehicles, such as ambulances, mobile workshops, minibuses, etc.

These are currently available on the market:

-FOR THE TRANSPORTATION OF MATERIALS and/or materials and persons:single body van-type vehicles (driver's cabin incorporated into the superstructure) constituted by steel or aluminium cambers supporting the outer plating.

-FOR SPECIAL AND/OR SPECIFIC TYPES OF TRANSPORTATION built on chassises as in previous point.

-FOR CAMPERS the supporting structure is made up of battens in wood or other material with outer plating in aluminium sheeting and with plywood or similar materials on the inside; insulating material such as polyeurethane, polystyrene or similar is sandwiched in the grid produced by the structure.

0237494

Some fibreglass structures are also available which are composed of only the plating of the outer shell to be supported by cambers and finally there are fibreglass products for interior and outer plating supported by wooden battens, without floor, and without driver's cabin incorporated.

In any case all superstructures are built individually and are mountable only on the vehicle they have been designed for, when the driver's cabin is not incorporated the superstructure is connected by means of various methods to the original driver's cabin which remains almost totally inaltered thereby leading to diiversity both in structure and style of the vehicle.

## DISADVANTAGES OF PRESENT PRODUCTION METHODS

<u>VAN TYPE VEHICLES INCORPORATING DRIVER'S CABIN</u>: for those built in metal no or scarce thermal and acoustic insulation, high costs in producing this, great and not constant thickness of cambers, easily attacked by rust; for all the others, either they are not connected or are only partially connected to the driver's cabin and do not include the floor which is constructed differently and with a different structure.

<u>FOR CAMPERS</u>: structural differences, scarce resistance, large number of joints and/or adhesions, presence of screws, scarce thermal and acoustic insulation, insulation gaps caused by cambers and grids, lack of thermal and acoustic insulation both of the cabin and the base, impossible to transform without disturbing the supporting structures, complex and expensive

repairs, great possibilrty of infiltration of water due to joints, dependence on superstructure or vice-versa, scarce or no compatibility between the structures, especially as regards the stress which the chassis has to undergo.

THE PURPOSE for which the new superstructure has been produced is first of all to offer a new superstructure which is equal in compatibility, at least as regards resistance and elasticity, to that of the chassis used, suitable for being mounted on any type of chassis thereby achieving a homogenous whole, both from the point of view of structure and style, and finally with the possibility of incorporating the original cabins, conserving the features described above.

Furthermore the new superstructure obviates all the disadvantages encountered in present methods of production thereby allowing both bare chassises and chassises with cabins to be transformed into van-type vehicles with the cabin incorporated into the main body.

THE ADVANTAGES that the new superstructure in particular offer are:

ACOUSTIC INSULATION: the various layers of which the body is composed, their different densities, their absorbing and antivibration powers which eliminate the phenomena of reverberation and resonance, constitute an effective means of cutting out noise thereby guaranteeing excellent acoustic insulation.

THERMAL INSULATION. This is particularly effective and efficient, with no insulation gaps, covering also the floor and the driver's cabin, produced by means of a continuous layer of polyyeurethene, polyvinyl chloride or other expanded material sandwiched between the external plating and the internal fibreglass plating.

WATERTIGHTNESS AND HEALTHINESS, guaranteed by the continuous shell free of joints and by the very nature of fibreglass with its impregnable by aggressive agents, does not rot, is washable and does not alter with time.

MODULARITY both in the structure, guaranteed by its self-supporting properties and therefore by the possibility (by dividing the shell into two or four parts) of varying the sizes in all three dimensions with the addition of inserts as shown in table 1 and table 2, and the interior arrangement which, being interdependent as regards the position of doors and windows, is made possible by the feature of being able to plan these afterwards and arrange them in any position.

STRUCTURAL HARMONY AND RESISTANCE guaranteed by the great strength and elasticity of the double fibreglass shell sandwiched with insulating material which, while contributing to the static resistance of the capacity, forms a structure whose elasticity adapts itself fully to that of the chassis on which it is built.

Furthermore in the evnt of a crash, the structure's elasticity

4

enables it to absorb a considerable amount of the force without suffering permanent deformation. Lastly, the <constant thickness and homogenous resistance at all points of the superstructure give it a sturdiness which improves and increases the degree of resistance to shock of the vehicle, extending this protection in all six directions.

REPARABILITY in the event of accident where there are breakages of parts; these can be repaired either by replacing the part or by reconstructing it using normal fibreglass production techniques.

MAY BE ATTACHED to all chassises, in particular to the various positions of the already existing lug bolts made possible and guaranteed by the two strips of metal sheeting applied to the base as shown in table 3 detail 3.

CONSTRUCTION EXAMPLES: it is particularly interesting to describe a construction on an Iveco 35.10 chassis, both the calender only and the cabin version.

In the case of the calender only version, transformation into van type vehicle is extremely simple and consists, as shown in table 3 detail 1 of simply bolting the superstructure onto the chassis lug bolts designed for that purpose table 3 detail 4 by boring holes in the base of the superstructure table 3 detail 5. The various sizes are obtained, as already described in the modularity paragraph; furthermore it is possible to use the method already described to attach also to other types and

5

makes of chassis.

The procedure for the chassis with cabin is the same as the one already described, except that the calender and the driver and the passenger doors have to be removed sufficiently to allow the original cabin to which the superstructure is then fixed by means of riveting to be inserted, thios is then followed by a layer of fibreglass as shown in table 4 detail 6; the special recesses table 4 detail 7 allow the profile of the original cabin to be adapted to the profile of the superstructure so as to achieve perfect harmony of struicture and style; it is clear that in this case too construction is possible for the various makes and models of cabin.

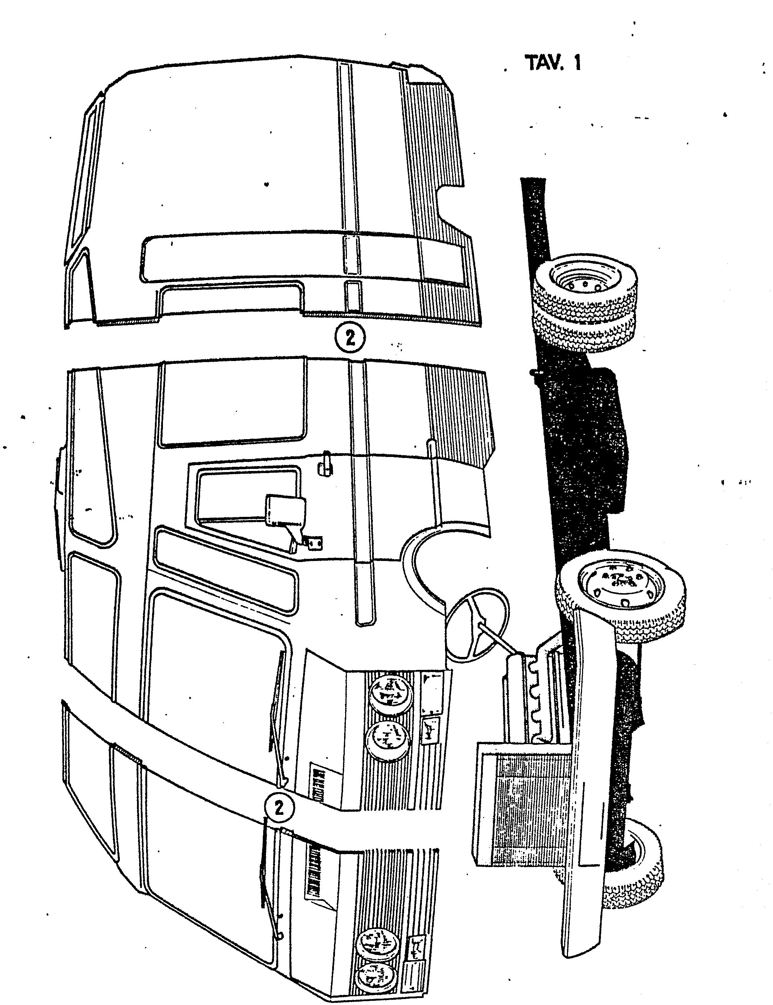

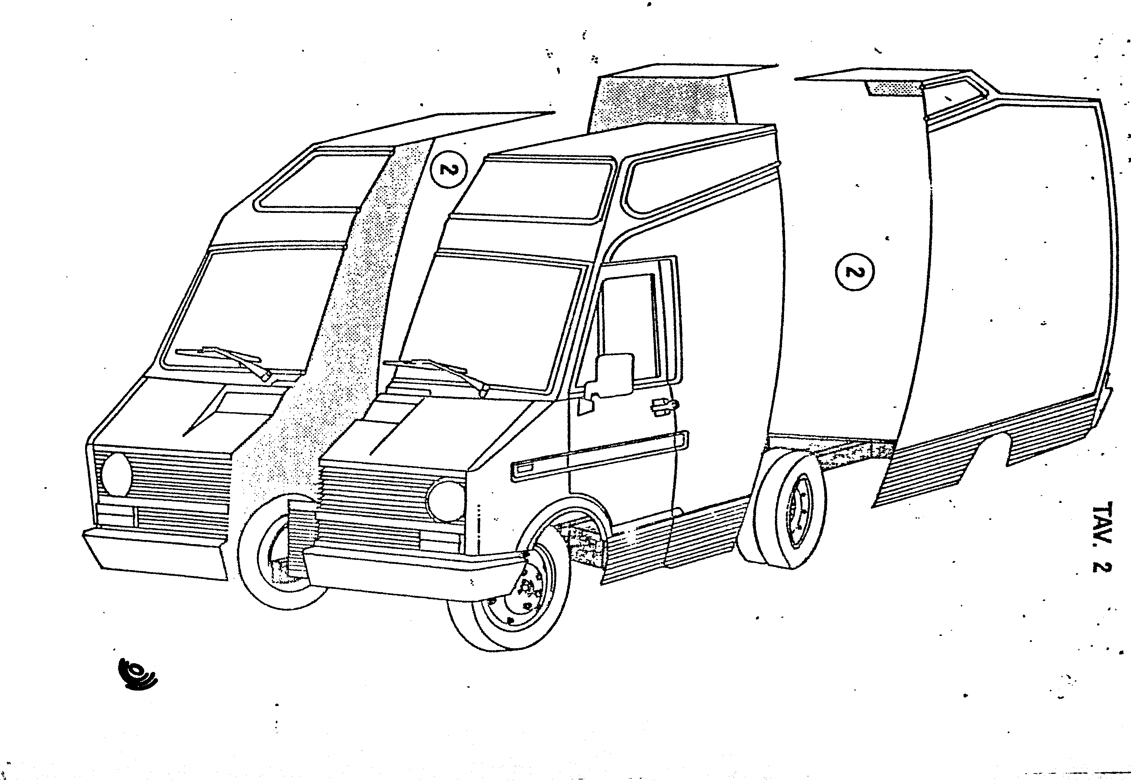

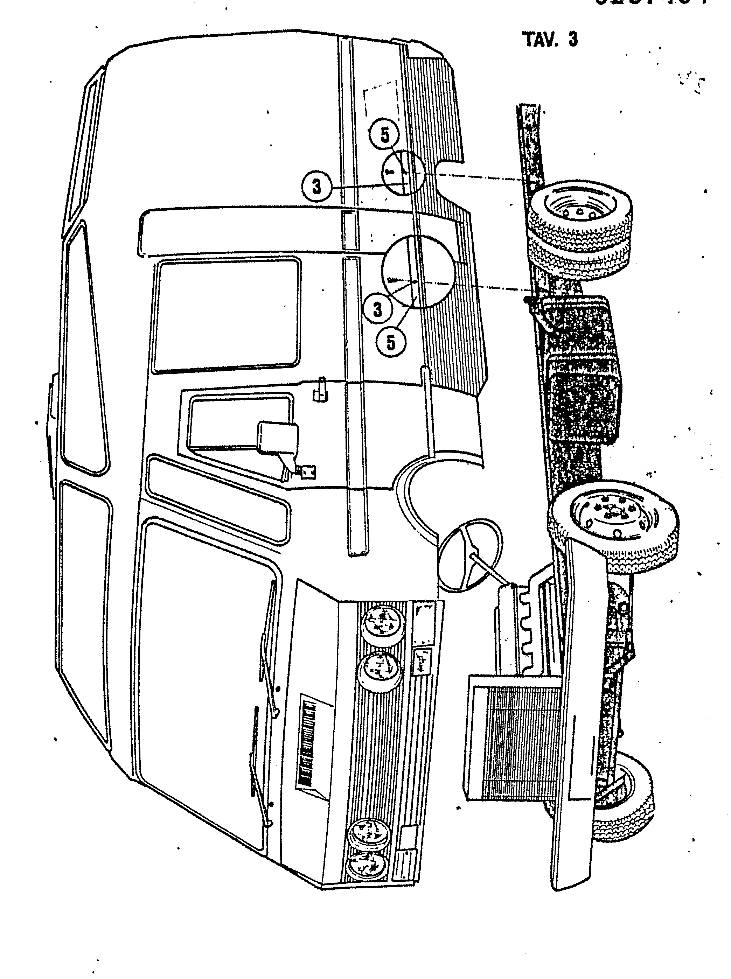

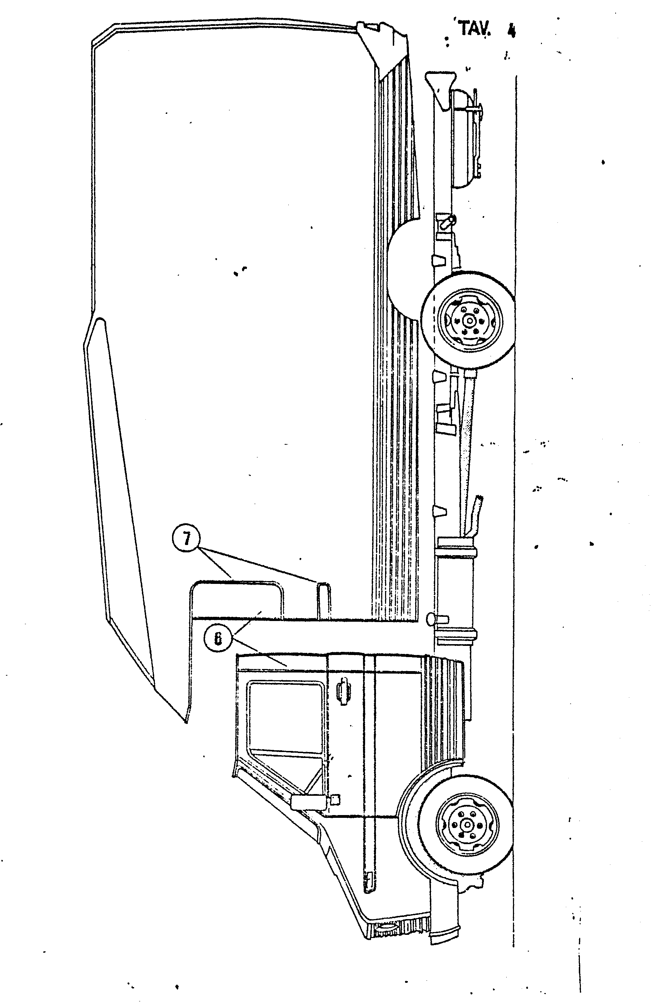

CLAIMS:

the technical and constructional features which characterise the superstructure are the following:

1) CONSTRUCTION IN A SINGLE SHELL, in a double layer of fibreglass sandwiched with insulating material playing a structural part, for all six sides making up the superstructure.

2) SPECIAL RECESS designed to combine the various forms of the original cabin with the superstructure as indicated in table 4 detail7.

3) DOUBLE STRIP of metal sheeting applied to the base suitable for attaching to any type of chassis as shown in table 3 detail 3.

4) MODULARITY as already shown and described in table 1 and table 2 the shell may be divided and inserts added thereby allowing variazions in all three dimensions.

5) VARIABILITY OF ARRANGEMENT offered by the possibility of: arranging the interior of the superstructure in any way; and on the outside of positioning any openings such as doors and windows, and is therefore ideal for special uses and in particular campers.

0237494

TAV. 1

0237494

TAV. 3

0237494

TAV. 4

European Patent
Office

**EUROPEAN SEARCH REPORT**

Application number

0237494

EP    87 83 0067

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 057 909  (BISCHOFF)<br>* Claims; figures 1-14 * | 1-3,5 | B 60 P    3/32<br>B 60 P    3/42<br>B 62 D   29/04 |
| X | DE-A-2 215 973  (BAUER)<br>* Claims; figures a-c * | 1-3,5 | |
| X | DE-A-3 242 564  (BISCHOFF)<br>* Claims; figures 1,2 * | 1,5 | |
| A | FR-A-2 571 007<br>(HOBBY-WOHNWAGENWERK)<br>* Whole document * | 1,5 | |
| A | FR-A-1 158 093  (HENON)<br>* Whole document * | 1,5 | TECHNICAL FIELDS SEARCHED (Int. Cl.4)<br><br>B 60 P<br>B 62 D<br>A 61 G |

The present search report has been drawn up for all claims

| Place of search | Date of completion of the search | Examiner |
|---|---|---|
| THE HAGUE | 27-05-1987 | PIRIOU J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82